# EUROPÄISCHE PATENTSCHRIFT

(11) **EP 0 473 977 B1**
(45) Veröffentlichungstag und Bekanntmachung des Hinweises auf die Patenterteilung: **21.06.1995**
(21) Anmeldenummer: 91113516.8
(22) Anmeldetag: 12.08.1991
(51) Int. Cl.: H01G 4/22

(54) **Imprägnierter elektrischer Kondensator**
Empregnated electrical capacitor
Condensateur électrique imprégné

(30) Priorität: 07.09.1990 DE 4028517
(43) Veröffentlichungstag der Anmeldung: 11.03.1992
(73) Patentinhaber: SIEMENS AKTIENGESELLSCHAFT, 80333 München (DE)
(72) Erfinder: Hübscher, Wilhelm, Dipl.-Ing.(FH), W-7929 Gerstetten (DE); Erhardt, Werner, Dipl.-Ing.(FH), W-7901 Ballendorf (DE)

(56) Entgegenhaltungen:
- EP-A- 0 388 689
- DE-A- 3 739 984

## Beschreibung

Die Erfindung betrifft einen imprägnierten elektrischen Kondensator nach dem Oberbegriff des Patentanspruchs 1.

Derartige Kondensatoren sind aus den deutschen Offenlegungsschriften 3546425 und 3739984 bekannt. Dort erfolgt die Abdichtung der Imprägnieröffnung innerhalb des Gewindebolzens, so daß die Gefahr besteht, daß bei einer Überbeanspruchung des Befestigungsbolzens bei der Montage des Kondensators (An- oder Abriß) Imprägniermittel austreten kann.

Aufgabe der vorliegenden Erfindung ist es, einen Kondensator mit Imprägnieröffnung in einem Befestigungsbolzen anzugeben, bei dem die Imprägnieröffnung durch einen Niet verschlossen ist und bei dem die vorstehend beschriebene Gefahr des Austritts von Imprägniermittel bei An- oder Abriß des Gewindebolzens verhindert wird.

Diese Aufgabe wird durch die im Patentanspruch 1 angegebenen Maßnahmen gelöst.

Eine Weiterbildung der Erfindung ist im Patentanspruch 2 angeführt.

Der Gegenstand der Erfindung wird anhand der folgenden Ausführungsbeispiele erläutert.

In der dazugehörigen Zeichnung zeigen
Figur 1 einen in ein Gehäuse eingebauten Kondensator und
Figur 2 und 3 vergrößerte Einzelheiten aus Figur 1.

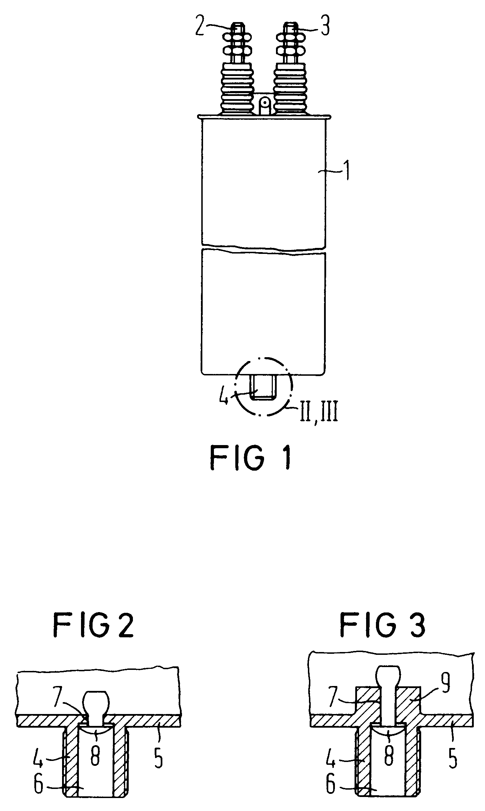

In der Figur 1 ist ein metallisches Kondensatorgehäuse 1 dargestellt, in das ein imprägnierter Kondensator eingebaut ist. Das Kondensatorgehäuse 1 besitzt an seinem oberen Ende zwei Anschlüsse 2, 3, an die die Kondensatorelektroden im Innern geführt sind.

Am unteren Ende des Kondensatorgehäuses 1 befindet sich ein Befestigungsbolzen 4, der mit einem Gewinde sowie einer Imprägnieröffnung versehen ist.

In der Figur 2 ist eine Ausführungsform des Gewindebolzens 4 in vergrößerter Darstellung gezeigt. Der Befestigungsbolzen 4 ist am Boden des Gehäuses 1 angeordnet und weist eine Imprägnieröffnung 6 auf. Die Imprägnieröffnung 6 ist derart ausgebildet, daß ihr Durchmesser innerhalb des Befestigungsbolzens 4 größer ist als in der Wandung 5 des Gehäuses 1. Hierdurch entsteht eine Einschnürung 7 verringerten Durchmessers, so daß der Nietkopf 8 einen Anschlag erhält, der innerhalb der Gehäusewandung (5) und nicht im Befestigungsbolzen 4 liegt. Durch diese Maßnahme wird erreicht, daß beim Abscheren des Befestigungsbolzens 4 die Imprägnieröffnung 6 weiterhin abgedichtet ist.

In der Figur 3 ist eine weitere Ausführungsform eines Befestigungsbolzens 4 dargestellt, bei dem die Gehäusewandung 5 im Bereich der Imprägnieröffnung 6 nach innen versetzt angeordnet ist, so daß sich eine ins Innere des Gehäuses gerichtete Stufe 9 ergibt. Der im Bereich der Gehäusewandung 5 angeordnete Teil der Imprägnieröffnung 7 weist wiederum einen geringeren Durchmesser als die Imprägnieröffnung 6 im Bereich des Befestigungsbolzens 4 auf. Hierdurch wird eine Auflage für den Nietkopf 8 geschaffen.

Die nach innen gerichtete Stufe 9 der Gehäusewandung 5 ergibt eine zusätzliche Sicherung, so daß beim Abscheren des Befestigungsbolzens 4 die Imprägnieröffnung 7 in sicherer Weise verschlossen bleibt.

## Patentansprüche

1. Imprägnierter elektrischer Kondensator, der in ein Gehäuse (1) eingebaut ist, das einen Befestigungsbolzen (4) besitzt und der eine durch einen Niet mit Nietkopf (8) verschließbare Imprägnieröffnung (6) aufweist, die durch eine Bohrung im Befestigungsbolzen (4) und eine in der Gehäusewandung (5) angeordnete Bohrung gebildet ist,
**dadurch gekennzeichnet**, daß
die Bohrung in der Gehäusewandung (5) einen gegenüber der Bohrung im Befestigungsbolzen (4) verminderten Querschnitt (7) besitzt, der als Anschlag für den Nietkopf (8) dient.

2. Imprägnierter elektrischer Kondensator nach Anspruch 1,
**dadurch gekennzeichnet**, daß
die Gehäusewandung (5) im Bereich der Imprägnieröffnung (6) eine nach innen gerichtete Stufe (9) besitzt.

## Claims

1. Impregnated electrical capacitor, which is incorporated in a container (1) which has a fastening bolt (4) and an impregnating opening (6), which can be closed by a rivet with a rivet head (8) and is formed by a hole in the fastening bolt (4) and a hole arranged in the container wall (5), characterized in that the hole in the container wall (5) has a cross-section (7) which is reduced in comparison with the hole in the fastening bolt (4) and serves as a stop for the rivet head (8).

2. Impregnated electrical capacitor according to Claim 1, characterized in that the container wall (5) has an inwardly directed step (9) in the region of the impregnating opening (6).

## Revendications

1. Condensateur électrique imprégné, qui est monté dans un boîtier (1) ayant un boulon de fixation (14) et qui comprend une ouverture d'imprégnation (6) pouvant être fermée par un rivet à tête (8) et formée par un perçage ménagé dans le boulon de fixation (4) et par un perçage ménagé dans la paroi (5) du boîtier,
caractérisé par le fait que le perçage ménagé dans la paroi (5) du boîtier possède une section transversale (7), qui est réduite par rapport au perçage ménagé dans le boulon de fixation (4) et qui est utilisée comme butée pour la tête de rivet (8).

2. Condensateur électrique imprégné suivant la revendication 1, caractérisé par le fait que la paroi (5) du boîtier possède, dans la région de l'ouverture d'imprégnation (6), un épaulement (9) rentrant.
